# DEMANDE DE BREVET EUROPEEN

(11) **EP 3 587 363 A1**
(43) Date de publication de la demande: **01.01.2020**
(21) Numéro de dépôt: 19183005.8
(22) Date de dépôt: 27.06.2019
(51) Int. Cl.: C03B 13/00, C03B 13/16

(54) **DISPOSITIF DE LAMINAGE A INTERSTICE MESURABLE**

(30) Priorité: 29.06.2018 FR 1870780
(71) Demandeur: Saint-Gobain Glass France, 92400 Courbevoie (FR)
(72) Inventeur: CUESTA REQUENA, Carlos, 33401 AVILES - ASTURIAS (ES); BLANCO GOMEZ, David, 33207 GIJON - ASTURIAS (ES); RODRIGUEZ RODRIGUEZ, Armando, 33450 PIEDRASBLANCAS, CASTRILLON - ASTURIAS (ES)
(74) Mandataire: Saint-Gobain Recherche

(57) **Abrégé**

[La présente invention concerne un dispositif de mesure (200) pour dispositif de laminage comprenant deux paliers (211) montés coulissants l'un par rapport à l'autre dans le même plan par l'intermédiaire d'éléments coulissants (212), caractérisé en ce que ledit dispositif de mesure comprend en outre un transducteur (201) agencé entre les deux paliers pour transformer le déplacement des paliers l'un par rapport à l'autre en un signal électrique. Le dispositif de mesure (200) peut être directement agencé sur le dispositif comprenant les laminoirs (102), (103).

## Description

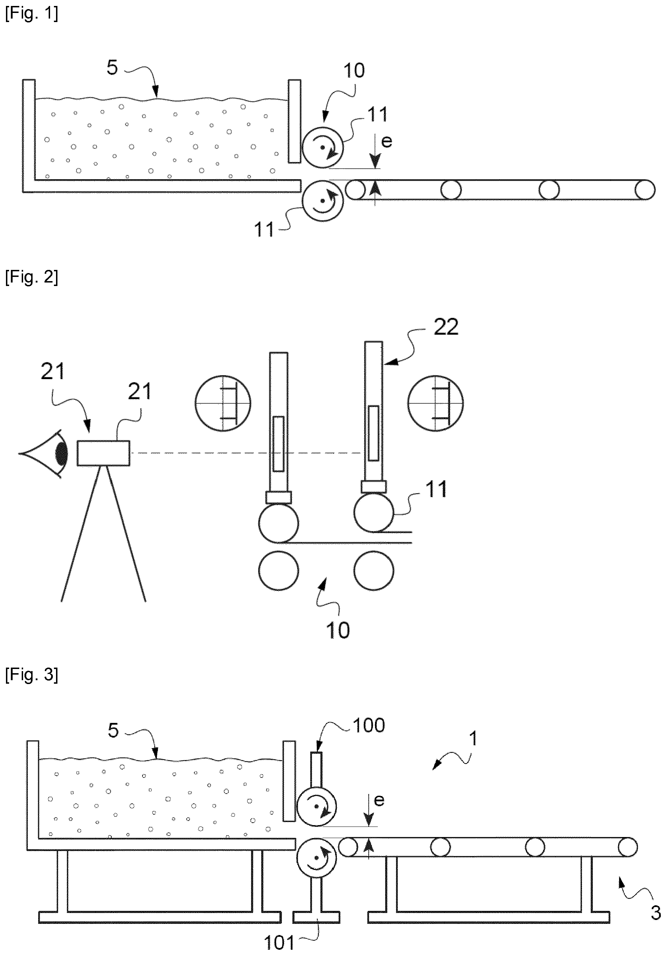

Actuellement, il est connu de réaliser un laminage d'un substrat verrier utilisant un dispositif de laminage. Ce laminage est un procédé de fabrication par déformation plastique obtenue par compression continue au passage entre deux cylindres 11 contrarotatifs appelés laminoir. Ces laminoirs sont agencés pour qu'un espace e soit présent entre eux comme visible à la figure 1. Cet espace défini l'épaisseur du substrat verrier en sortie de laminage.

Or, dans les procédés industriels modernes, il est important de pouvoir garantir une précision sur l'épaisseur du substrat en sortie.

Pour cela, l'un des laminoirs est monté mobile c'est-à-dire qu'il est possible de régler l'espace entre les laminoirs. Pour cela, un système à vis peut être utilisé pour régler l'espace.

L'espace entre les deux laminoirs est alors estimé par l'opérateur qui approxime la distance de l'espace entre les laminoirs en fonction de ces manipulations sur le système à vis. En effet, son expérience lui permet de connaitre approximativement le déplacement du laminoir pour une rotation du système à vis.

Pour mesurer l'espace entre les laminoirs, il existe la possibilité d'utiliser un système optique 20 comme visible à la figure 2. Ce système optique 20 consiste à placer une caméra 21 à une distance définie du dispositif de laminage 1. Le laminoir supérieur, qui est monté mobile, est équipé d'un repère gradué 22. La caméra est alors pointée vers le repère gradué de sorte à permettre une lecture de la graduation.

Or, cette méthode ne permet pas une mesure précise puisqu'elle ne permet de mesurer que la position du laminoir mobile. Ainsi, en cas de modification de la position du laminoir inférieur, l'écart entre les deux laminoirs n'est plus mesuré correctement.

La présente invention a pour but de remédier aux inconvénients de l'art antérieur en fournissant un dispositif de laminage dans lequel l'écart de distance entre les deux laminoirs est mesuré de façon précise.

A cet effet, la présente invention concerne un dispositif de mesure pour dispositif de laminage comprenant deux paliers montés coulissants l'un par rapport à l'autre dans le même plan par l'intermédiaire d'éléments coulissant, caractérisé en ce que ledit dispositif de mesure comprend en outre un transducteur agencé entre les deux paliers pour transformer le déplacement des paliers l'un par rapport à l'autre en un signal électrique.

Le dispositif de laminage selon la présente invention présente l'avantage de pouvoir mesurer la distance entre les deux laminoirs. On comprend par la que la distance entre les deux laminoirs est mesurée précisément même si le premier et/ou le second laminoir bougent.

Selon un exemple, lesdits éléments coulissants comportent un tube et une tige dont les diamètres permettent à la tige de coulisser dans le tube.

Selon un exemple, chaque palier comprend une platine sur laquelle les éléments coulissants et le transducteur sont agencés.

Selon un exemple, ledit transducteur est agencé pour coopérer avec une unité de calcul apte à traiter ledit signal électrique et fournir une valeur d'espacement entre les paliers.

L'invention concerne en outre un dispositif de laminage comprenant un chassis comprenant deux paires de paliers principaux entre lesquelles sont montés un premier laminoir et un second laminoir, le second laminoir étant monté mobile par rapport au premier laminoir via des moyens de déplacement, caractérisé en ce que ledit dispositif comprend en outre au moins un module de mesure venant se fixer aux laminoirs.

Selon un exemple, il comprend deux modules de mesure montés de part et d'autres du premier laminoir et du second laminoir pour contrôler le parallélisme des laminoirs entre eux.

L'invention concerne en outre un dispositif de laminage comprenant un chassis comprenant deux paires de paliers principaux entre lesquelles sont montés un premier laminoir et un second laminoir, le second laminoir étant monté mobile par rapport au premier laminoir via des moyens de déplacement, caractérisé en ce que ledit dispositif comprend en outre un module de mesure comprenant au moins un transducteur agencé entre les paliers principaux du premier laminoir et du second laminoir pour convertir la position dudit second laminoir par rapport au premier laminoir en signal électrique.

Selon un exemple, le module de mesure comprend deux transducteurs, chaque transducteur est connecté entre un palier principal du premier laminoir et un palier principal du second laminoir positionnées en regard l'une de l'autre.

Selon un exemple, les moyens de déplacement comprennent des moyens d'indexation pour verrouiller la position du second laminoir par rapport à la position du premier laminoir.

Selon un exemple, le transducteur est résistif.

Selon un exemple, le transducteur est inductif.

Selon un exemple, il comprend en outre une unité de calcul agencée pour être connectée audit au moins un module de mesure.

L'invention concerne également un procédé de laminage d'un substrat verrier par un dispositif de laminage comprenant un chassis sur lequel est monté un premier laminoir, un second laminoir étant monté mobile par rapport au premier laminoir via des moyens de déplacement, caractérisé en ce que ledit dispositif comprend en outre un module de mesure comprenant un transducteur agencé entre le premier laminoir et le second laminoir pour convertir la position dudit second laminoir par rapport au premier laminoir en signal électrique et que ledit procédé comprend les étapes suivantes :
- Mesurer l'espacement entre le premier laminoir et le second laminoir à l'aide dudit module de mesure;
- Régler l'espacement entre le premier laminoir et le second laminoir à l'aide d'un module de déplacement permettant au second laminoir de se déplacer par rapport au premier laminoir;
- Laminer ledit substrat verrier.

Selon un exemple, il comprend en outre une étape de calibration consistant à utiliser au moins deux gabarits, pour chaque gabarit, une mesure de l'espacement étant réalisée.

Selon un exemple, pour chaque gabarit, des mesures sont réalisées pour au moins deux positions angulaires différentes des laminoirs.

Selon un exemple, les différentes positions angulaires des laminoirs sont régulièrement réparties.

Selon un exemple, le module de mesure comprend deux transducteurs.

Selon un exemple, l'étape de réglage de l'espacement entre le premier laminoir et le second laminoir est réalisée manuellement, en agissant sur les moyens de déplacement.

Selon un exemple, l'étape de réglage de l'espacement entre le premier laminoir et le second laminoir est réalisée automatiquement par une unité de calcul envoyant au moins un signal de commande aux moyens de déplacement en fonction de la mesure de l'espacement entre le premier laminoir et le second laminoir.

D'autres particularités et avantages ressortiront clairement de la description qui en est faite ci-après, à titre indicatif et nullement limitatif, en référence aux dessins annexés, dans lesquels:
- les fig 1 et 2 sont des représentations schématiques d'un dispositif de laminage et d'un système de mesure de l'écartement selon l'art antérieur;
- la fig. 3 est une représentation schématique d'une ligne de production munie d'un dispositif de laminage selon l'invention;
- les fig. 4 à 7 sont des représentations schématiques de différentes exécutions d'un dispositif de laminage selon l'invention;
- la fig. 8 est une représentation schématique d'une variante du dispositif de laminage selon l'invention;

Sur la figure 3, un dispositif de laminage 100 selon l'invention est représenté. Un tel dispositif est intégré dans une ligne de production 1. Des moyens de convoyage 3 sont agencés postérieurement audit dispositif de laminage. Ces moyens de convoyage 3 permettent de faire défiler des substrats verrier.

Le dispositif de laminage 100 comprend un chassis 101 sur lequel est monté un premier laminoir 102.

Le dispositif de laminage comprend un second laminoir 103, monté de façon contrarotative par rapport au premier afin de permettre ledit laminage. Ce second laminoir 103 est monté mobile par rapport au premier laminoir via des moyens de déplacement 104. De préférence, le second laminoir est monté pour être à la verticale du premier laminoir. Ces laminoirs 102, 103 sont montés sur le dispositif de laminage 100 par l'intermédiaire de paliers principaux 105.

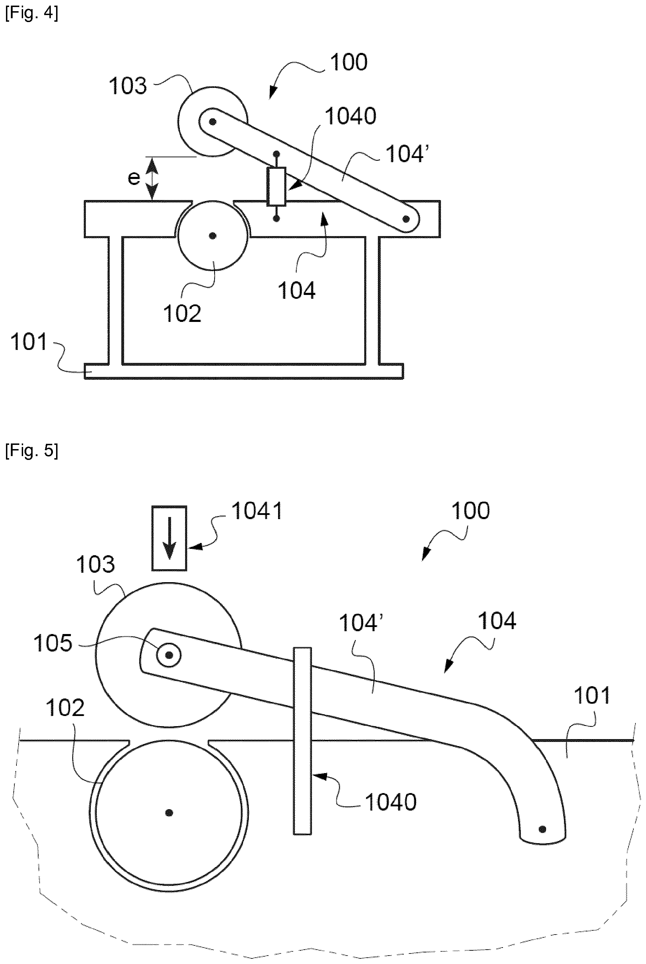

Dans un exemple de réalisation visible aux figures 4 et 5, les moyens de déplacement 104 comprennent une paire de bras 104' fixés au chassis 101 sur lesquels le second laminoir 103 est monté. Ces bras 104' sont fixés de sorte à autoriser une liberté de rotation ou de pivotement par rapport au chassis 101. Dans ce second exemple, les moyens de déplacement 104 comprennent un module de réglage 1040 permettant la variation de la position du laminoir et l'indexation / verrouillage de la position des bras.

Les moyens de déplacements 104 peuvent comprendre en outre un module de maintien 1041. Ce module de maintien est utilisé pour maintenir la position du second laminoir 103 et éviter que cette position ne varie. Pour cela, le module de maintien est agencé pour exercer une pression sur ledit laminoir. Cette pression maintien 1041 permet, d'une part, de s'assurer que le second laminoir 103 ,mobile, fera bien son travail. De plus, cette pression permet de stabiliser la position du second laminoir 103 en cas de perturbations extérieures.

Le module de réglage 1040 comprend un système à vis ou un système pneumatique ou un système hydraulique ou un système à servomoteurs pour opérer le réglage. Le module de maintien 1041 comprend un système pneumatique ou un système hydraulique ou un système de poids pour exercer une pression sur ledit second laminoir 103.

Selon l'invention, le premier laminoir 102 est le laminoir inférieur qui est fixe alors que le second laminoir 103 est le laminoir supérieur.

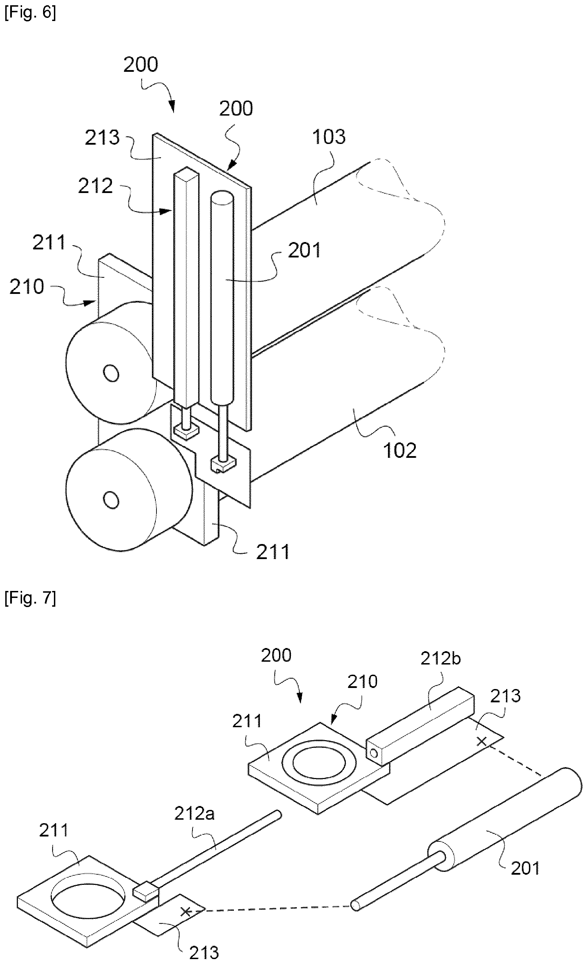

Pour être capable de mesurer l'écart entre les deux laminoirs, la présente invention est avantageuse en ce que le dispositif de laminage 100 comprend en outre un module de mesure de l'espacement 200 comme visible aux figures 6 et 7. Ce module de mesure de déplacement 200 est un module transformant un signal physique en un signal électrique et plus particulièrement un déplacement en un signal électrique. Un tel module de mesure de l'espacement utilise un transducteur 201 pour réaliser cet objectif.

Dans un premier mode d'exécution, le module de mesure 200 est directement agencé sur le dispositif de laminage 100. On comprend par la que le module de mesure 200 est agencé au niveau des paliers principaux 105 soutenant les laminoirs 102, 103.

Dans un second mode d'exécution visible à la figure 7, le module de mesure 200 est un module indépendant. Un tel module de mesure 200 comprend une partie mécanique 210 sur laquelle le transducteur 201 est agencé. Cette partie mécanique 210 est agencée pour être fixée sur les laminoirs 102, 103. Cette partie mécanique comprend donc deux paliers 211. Chaque palier 211 est dimensionné pour être facilement monté sur les laminoirs et y être facilement démonté. Ces deux paliers sont montés mobiles l'un par rapport à l'autre. Plus particulièrement, ces paliers 211 sont montés de sorte qu'ils soient coulissant l'un par rapport à l'autre dans le même plan. Pour cela, des éléments coulissant 212 sont agencés. Un premier palier 211 comprend une tige 212a s'étendant suivant la direction voulue du coulissement alors que le second palier 211 comprend un tube 212b. Ce tube 212b s'étend également dans la direction voulue pour le coulissement. Ce tube 212b est dimensionné pour que la tige du premier palier 211 puisse s'y insérer et y être mobile et former les éléments coulissants. Chaque transducteur 201 est fixé au tube 212b et à la tige 212a. En plus, il peut être également prévu des platines 213 pour protéger les système de mesure de la radiation thermique et/ou pour éventuellement monter les des éléments coulissant 212.

A cette partie mécanique, le transducteur 201 selon l'invention est monté. Ce transducteur 201 comprend un curseur monté mobile et est monté de sorte que le curseur soit fixé à l'un des paliers 211. Pour cela, chaque palier 211 peut comprendre une platine s"étendant depuis le palier. Ainsi, lorsque la partie mécanique 210 est fixé sur les laminoirs 102, 103, le mouvement de ces derniers entraine donc le coulissement du premier palier 211 par rapport au second palier 211. Si on considère que le premier palier 211 est agencé pour se connecter au premier laminoir 102 et que le second palier 211 est agencé pour se connecter au second laminoir 103 alors le second palier, fixé au laminoir mobile, est le palier qui va se déplacer.

Dans le premier mode d'exécution et le second mode d'exécution, on pourra considérer que le curseur est solidaire du laminoir mobile 103 mais aussi que le curseur est solidaire du laminoir fixe 102 et que c'est le transducteur qui, solidaire du laminoir mobile, bouge. Dans les deux cas, une grandeur électrique varie en fonction de ce déplacement.

Le transducteur 201 utilisé dans le module de mesure de l'espacement 200 peut utiliser plusieurs principes physiques.

Un premier transducteur 201 utilisable est un transducteur résistif. Un tel transducteur utilise la une résistance variable pour la détection du mouvement. Ce transducteur fonctionne sur un principe similaire à celui d'un potentiomètre c'est-à-dire que une résistance variable à trois bornes, dont une est reliée à un curseur se déplaçant sur une piste résistante terminée par les deux autres bornes. Dans le cas présent, le transducteur résistif est agencé pour que le curseur soit solidaire en mouvement du second laminoir 103, notamment en étant fixé sur l'une des plaques sur lesquelles le second laminoir 103 est fixé. De cette façon, le mouvement du second laminoir entraine le déplacement du curseur modifiant ainsi la valeur de la résistance. Cette valeur de résistance est donc représentative de la position du second laminoir 103 par rapport au premier laminoir. Il est donc possible de calibrer ledit transducteur pour fournir un signal électrique variant en fonction de cette valeur de résistance. Ce signal électrique variable est représentatif de la position du second laminoir par rapport au premier laminoir.

Le dispositif de laminage 100 est associé à une unité de calcul 300 intégré audit dispositif de laminage ou déportée comme visible à la figure 7. Cette unité de calcul 300 est connectée au transducteur 201 afin de pouvoir traiter le signal électrique représentatif de la position du second laminoir 103 par rapport au premier laminoir.

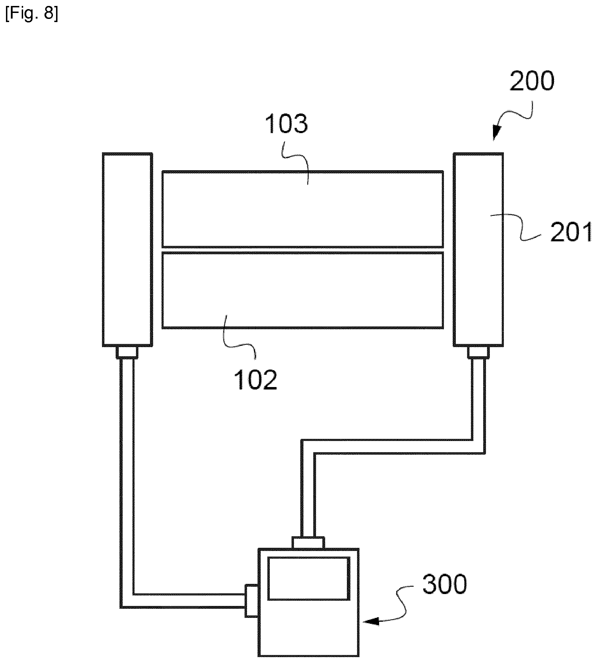

Dans une première variante, le module de mesure 200 du dispositif de laminage 100 comprend deux transducteurs 201 comme visible à la figure 8. Ces deux transducteurs 201 sont agencés de part et d'autre du second laminoir 103 que ce soit dans le cas du premier mode d'exécution dans lequel ils sont directement intégrés au dispositif de laminage 100 ou dans le cas du second mode d'exécution ou ils sont intégrés dans un module amovible. Chaque transducteur 201 voit donc son curseur fixé à l'une des plaques ou paliers 105 soutenant le second laminoir 103. Un déplacement du second laminoir 103 entraine le déplacement des deux curseurs et donc la génération, par chacun des transducteurs 201, d'un signal électrique représentatif du déplacement du second laminoir 103. Préférentiellement, les curseurs seront fixés au niveau de l'axe du second laminoir 103. Cette position est un repère particulier limitant les décalages de positions initiaux.

Cette génération de deux signaux électriques représentatifs du déplacement permet avantageusement de déterminer si le second laminoir 103 se trouve dans une position bancale c'est-à-dire de déterminer si l'axe du laminoir se trouve bien parallèle par rapport à l'axe du premier laminoir. Une telle mesure permet d'optimiser le réglage de la position du second laminoir.

Pour obtenir des mesures fiables, il est nécessaire d'avoir une étape de calibration des transducteurs afin d'obtenir des mesures fiables.

Cette étape de calibration consiste à utiliser des gabarits sous forme de plaques calibrées c'est-à-dire des plaques dont l'épaisseur est connue et précise. Cette étape de calibration consiste à faire passer successivement les différents gabarits entre les laminoirs. Pour chaque gabarit, la calibration consiste à placer le gabarit entre les laminoirs et à régler la position des laminoirs pour qu'ils soient en contact avec ledit gabarit. Le ou les capteurs génèrent donc un signal électrique représentatif de la position du second laminoir 103 par rapport au premier laminoir.

Une fois les différentes mesures opérées, il est possible de calibrer les capteurs et l'unité de calcul pour obtenir un résultat juste.

Dans une variante de cette calibration, l'étape de calibration consiste en outre prendre des mesures selon différentes positions angulaires des laminoirs. Pour cela, les laminoirs sont mis en rotation. Préférentiellement, les mesures sont réalisées pour 4 positions angulairement décalées de 90 dégrées.

Cette variante permet avantageusement de prendre en compte les irrégularités et les excentricités des laminoirs et les pièces couplées à eux. En effet, ces derniers peuvent ne pas être parfaitement cylindriques. Cela peut être dû à la fabrication ou montage des laminoirs et les pièces couplées. Or, une imperfection d'un ou des laminoirs peut entrainer un laminage de mauvaise qualité.

La présente variante de calibration consistant à faire des mesures selon différentes positions angulaires des laminoirs permet de faire une moyenne de ces mesures pour obtenir une valeur lissée qui servira pour la calibration.

Dans une autre variante, le transducteur utilise une technologie autre que la technologie résistive. Une technologie utilisable est la technologie inductive. Une telle technologie utilise un capteur à inductance variable produisant un signal électrique proportionnel au déplacement d'un noyau conducteur ou magnétiquement perméable (tige en acier, le plus souvent) par rapport à une bobine. L'impédance d'une bobine varie proportionnellement au déplacement de la cible par rapport à une bobine alimentée par un courant alternatif.

Le signal est alors envoyé à une unité de calcul 300 qui le traite afin de fournir une valeur d'espacement. Cette valeur d'espacement est alors utilisée pour le réglage du dispositif de laminage si elle ne correspond pas à la valeur souhaitée. Ce réglage peut être manuel c'est-à-dire que l'opérateur va agir manuellement sur le dispositif de laminage pour modifier la valeur de l'espacement. Ce réglage peut aussi être automatique, on comprend par la que la valeur de l'espacement est régulée. Pour cela, l'unité de calcul 300 compare la valeur mesurée à une valeur de référence prédéterminée. Cette valeur de référence prédéterminée peut être sélectionnée parmi une pluralité de valeurs de référence représentative chacune d'une épaisseur de substrat verrier à obtenir.

Une fois la comparaison effectuée, l'unité de calcul 300 envoie des signaux de commande au module de réglage 1040 qui règle la position du laminoir supérieur. Dans le cas de la présence d'un module de maintien 1041 exerçant une pression via un système hydraulique, ou pneumatique ou un système à servomoteur(s), un signal de commande est également envoyé à ce module de maintien 1041.

Dans une autre variante, des moyens de refroidissement sont agencés au niveau des transducteurs. En effet, le dispositif de laminage est utilisé pour laminer un substrat de type verrier. Un tel substrat, pour être laminé, nécessite d'être à une température élevée (environ 1000-1200°C). Cette température élevée peut fausser les mesures des transducteurs ou les endommager. Ces moyens de refroidissement comprennent un coffrage étanche agencé autour du transducteur. Le transducteur est également étanche. Ce coffrage comprend une entrée et une sortie par laquelle un liquide de refroidissement comme de l'eau circule.

Bien entendu, la présente invention ne se limite pas à l'exemple illustré mais est susceptible de diverses variantes et modifications qui apparaîtront à l'homme de l'art.

## Revendications

1. [Dispositif de mesure (200) pour dispositif de laminage comprenant deux paliers (211) montés coulissants l'un par rapport à l'autre dans le même plan par l'intermédiaire d'éléments coulissant (212), **caractérisé en ce que** ledit dispositif de mesure comprend en outre un transducteur (201) agencé entre les deux paliers pour transformer le déplacement des paliers l'un par rapport à l'autre en un signal électrique.

2. Dispositif de mesure selon la revendication 1, dans lequel lesdits éléments coulissants comportent un tube (212b) et une tige (212a) dont les diamètres permettent à la tige de coulisser dans le tube.

3. Dispositif de mesure selon l'une des revendications précédentes, dans lequel sur chaque palier (211) les éléments coulissants et le transducteur sont agencés.

4. Dispositif de mesure selon l'une des revendications précédentes, dans lequel ledit transducteur (201) est agencé pour coopérer avec une unité de calcul (300) apte à traiter ledit signal électrique et fournir une valeur d'espacement entre les paliers.

5. Dispositif de laminage (100) comprenant un chassis (101) comprenant deux paires de paliers principaux entre lesquelles sont montés un premier laminoir (102) et un second laminoir (103), le second laminoir étant monté mobile par rapport au premier laminoir via des moyens de déplacement (104), **caractérisé en ce que** ledit dispositif comprend en outre au moins un module de mesure selon l'une des revendications précédentes venant se fixer aux laminoirs.

6. Dispositif de laminage selon la revendication précédente, dans lequel il comprend deux modules de mesure montés de part et d'autres du premier laminoir et du second laminoir pour contrôler le parallélisme des laminoirs entre eux.

7. Dispositif de laminage (100) comprenant un chassis (101) comprenant deux paires de paliers principaux entre lesquelles sont montés un premier laminoir (102) et un second laminoir (103), le second laminoir étant monté mobile par rapport au premier laminoir via des moyens de déplacement (104), **caractérisé en ce que** ledit dispositif comprend en outre un module de mesure (200) comprenant au moins un transducteur (201) agencé entre les paliers principaux du premier laminoir et du second laminoir pour convertir la position dudit second laminoir par rapport au premier laminoir en signal électrique.

8. Dispositif selon la revendication 7, dans lequel le module de mesure comprend deux transducteurs (201), chaque transducteur est connecté entre un palier principal du premier laminoir et un palier principal du second laminoir positionnées en regard l'une de l'autre.

9. Dispositif selon la revendication précédente, dans lequel les moyens de déplacement (104) comprennent des moyens de réglage (1040) pour modifier la position du second laminoir par rapport à la position du premier laminoir et des moyens de maintien (1041) pour exercer une pression tendant à plaquer ledit second laminoir sur le premier laminoir.

10. Dispositif selon l'une des revendications 5 à 9, dans lequel le transducteur est résistif.

11. Dispositif selon l'une des revendications 5 à 9, dans lequel le transducteur est inductif.

12. Dispositif selon l'une des revendications 5 à 11, dans lequel il comprend en outre une unité de calcul (300) agencée pour être connectée audit au moins un module de mesure.

13. Dispositif selon l'une des revendications précédentes, dans lequel un système de refroidissement est agencé pour protéger ledit transducteur.

14. Procédé de laminage d'un substrat verrier par un dispositif de laminage comprenant un chassis sur lequel est monté un premier laminoir, un second laminoir étant monté mobile par rapport au premier laminoir via des moyens de déplacement (104), **caractérisé en ce que** ledit dispositif comprend en outre un module de mesure comprenant un transducteur agencé entre le premier laminoir et le second laminoir pour convertir la position dudit second laminoir par rapport au premier laminoir en signal électrique et que ledit procédé comprend les étapes suivantes :
- Mesurer l'espacement entre le premier laminoir et le second laminoir à l'aide dudit module de mesure (200) ;
- Régler l'espacement entre le premier laminoir et le second laminoir à l'aide d'un module de déplacement (104) permettant au second laminoir de se déplacer par rapport au premier laminoir ;
- Laminer ledit substrat verrier

15. Procédé selon la revendication précédente dans lequel il comprend en outre une étape de calibration consistant à utiliser au moins deux gabarits, pour chaque gabarit, une mesure de l'espacement étant réalisée.

16. Procédé selon la revendication précédente, dans lequel, pour chaque gabarit, des mesures sont réalisées pour au moins deux positions angulaires différentes des laminoirs.

17. Procédé selon la revendication précédente, dans lequel, les différentes positions angulaires des laminoirs sont régulièrement réparties.

18. Procédé selon la revendication précédente, dans lequel, le module de mesure comprend deux transducteurs.

19. Procédé selon l'une des revendications 14 à 17, dans lequel, l'étape de réglage de l'espacement entre le premier laminoir et le second laminoir est réalisée manuellement en agissant sur les moyens de déplacement.

20. Procédé selon l'une des revendications 14 à 17, dans lequel, l'étape de réglage de l'espacement entre le premier laminoir et le second laminoir est réalisée automatiquement par une unité de calcul envoyant au moins un signal de commande aux moyens de déplacement (104) en fonction de la mesure de l'espacement entre le premier laminoir et le second laminoir.
